# EUROPEAN PATENT SPECIFICATION

(11) **EP 3 482 109 B1**
(45) Date of publication and mention of the grant of the patent: **10.03.2021**
(21) Application number: 17748938.2
(22) Date of filing: 07.07.2017
(51) Int. Cl.: F16K 7/06, F16K 7/07

(54) **PINCH VALVE**
QUETSCHVENTIL
VANNE À MANCHON

(30) Priority: 07.07.2016 IT 201600071110
(43) Date of publication of application: 15.05.2019
(73) Proprietor: Verne Technology S.r.l., 20121 Milano (IT)
(72) Inventor: PERILLO, Carlo, 23900 Lecco (IT); FIOCCHI, Lodovico, deceased (UY)
(74) Representative: Branca, Emanuela
(86) International application number: PCT/IB2017/054102
(87) International publication number: WO 2018/007990

(56) References cited:
- EP-A1- 2 777 821
- DE-B3-102007 006 764
- JP-A- S6 343 071
- JP-A- S58 214 074

## Description

### FIELD OF THE INVENTION

The present invention refers to a pinch valve, in particular pneumatically or mechanically actuated.

The pinch valve according to the present invention has an innovative outer profile aimed at optimising the pneumatic closing action of the valve and the elastic opening return, and an innovative inner profile that ensures, for the same passage port, that the closing stroke of the valve itself is minimised, thus reducing the opening and closing times thereof and reducing the structural stresses of the valve itself.

### BACKGROUND

Currently pinch valves, in particular pneumatically or mechanically actuated ones, are known which are generally used for blocking and adjusting abrasive, corrosive and fibrous products. Pinch valves are used increasingly frequently as blocking and adjustment valves for emulsions, liquid mortar, powders, gaseous substances, compressed air, dust, granulates, pellets and so on.

The introduction of compressed air or a liquid into the housing chamber of the pneumatic pinch valve, causes the closure of the sleeve, which is highly elastic. Alternatively, a mechanical device, exerting an adequate pressure towards the centre of the valve, allows the complete closure thereof. The reopening of the sleeve therefore takes place thanks to the elasticity of the material of which it consists and to the configuration of the sleeve itself.

The structure of the body of the sleeve ensures a free lip-shaped closure of the sleeve.

Thus it is ensured that there is an absolutely fluid-tight interruption of the flow of product and simultaneously the maximum lifetime of the sleeve. Therefore, the pneumatic or mechanical pinch valve closes and provides a tight seal of the flow of product.

As soon as the introduction of compressed air/liquid into the housing chamber of the pneumatic pinch valve is interrupted, and the chamber is vented or emptied, the sleeve, through its rebound elasticity/return force and with the pressure of the medium, opens for complete passage.

The advantages of pneumatically or mechanically-actuated pinch valves are in particular the free sliding of the product, a minimal friction resistance, tight closure without losses, the absence of problems of obstruction, low weight and cost-effectiveness of manufacture.

Despite the good general operation of pinch valves of the type considered here, known pinch valves of the state of the art suffer from some problems, in particular when it is wished to make valves adapted for supporting a large number of opening/closing cycles, with quick closing and opening times and with low manufacturing costs

DE 10 2007 006764 B3 discloses a pinch valve according to the preamble of claim 1.

EP 2 777 821 A1 discloses a further example of a pinch valve.

### SUMMARY OF THE INVENTION

The purpose of the present invention is to avoid the drawbacks that known solutions of the state of the art suffer from, by providing a pneumatically or mechanically-actuated pinch valve that makes it possible to optimise the seal of the valve itself, optimising the distribution of the pressure force exerted by the fluid or by the mechanical device on the sleeve itself.

Furthermore, a purpose of the present invention is to provide a pinch valve that, for the same passage port, makes it possible to minimise the closing stroke of the valve, thus reducing the opening and closing times thereof.

Last but not least, a purpose of the present invention is to provide a pinch valve that allows the correct positioning of the valve itself in its housing, thus ensuring the correct division of the forces, in the sleeve closing step.

These and other purposes according to the present invention are accomplished by a pinch valve according to claim 1.

Further characteristics of the apparatus according to the present invention are the object of the dependent claims.

### LIST OF FIGURES

The characteristics and advantages of the pinch valve according to the present invention will become clearer from the following detailed description, given as an example and not for limiting purposes, referring to the attached schematic drawings, in which:
- figure 1 is a perspective view of the pinch valve according to the present invention;
- figure 2 is a front view of the pinch valve according to the present invention;
- figure 3 is a side view of the pinch valve according to the present invention;
- figure 4 is a view from above of the valve of figure 3;
- figure 5 is a section view with a transverse plane of the pinch valve according to the present invention.

### DETAILED DESCRIPTION OF THE INVENTION

With reference to the attached figures, the pinch valve **1** according to the present invention comprises a hollow substantially cylindrical main body **10** extending mainly longitudinally.

Said main body **10** thus defines a longitudinal axis, and internally comprises an axial opening **20** also having mainly longitudinal extension.

Said main body **10** also comprises, at at least one of the ends **11** of said cylindrical body **10,** a portion defining an outer abutment surface **11a** that faces towards the outside of said cylindrical main body 10 and an inner abutment surface **11b** that faces towards the inside of said body 10, said ends **11** and said surfaces **11a, 11b** extending on a plane substantially perpendicular to the longitudinal axis of said cylindrical main body **10.**

The pinch valve **1** according to the present invention also comprises, on said main body **10,** at least one narrowing area **13,** preferably central with respect to the longitudinal extension of said main body **10.**

Said narrowing area consists of two opposite tapered segments **13a, 13b,** with conical geometry, substantially at the central area of the main body **10.** At said central narrowing area 13 there is therefore the portion of smaller diameter of said tapered segments **13a** and **13b** with conical geometry. On said main body **10** there will be, starting from each end **11,** a first cylindrical segment **10a, 10b** from which said tapered segments with conical geometry **13a** and **13b** respectively extend.

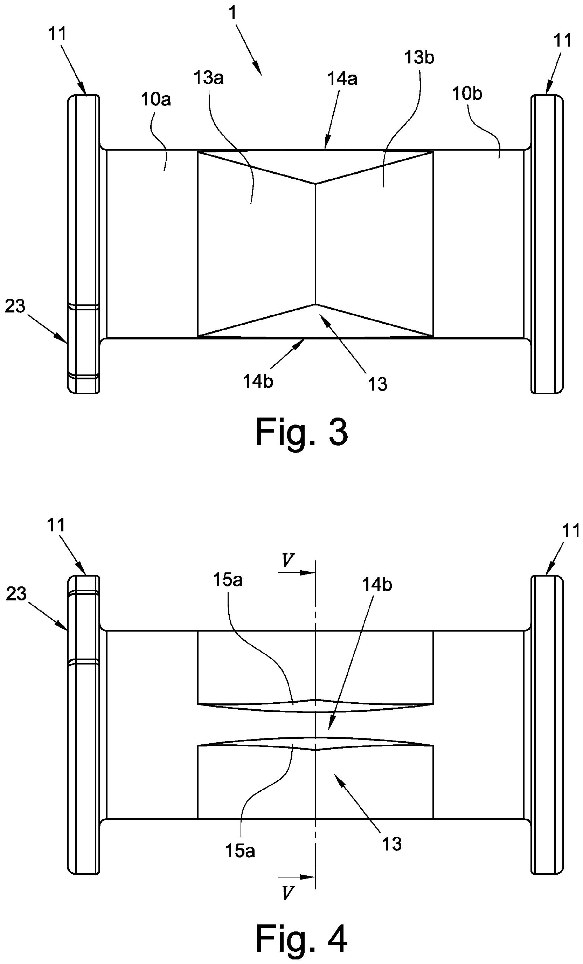

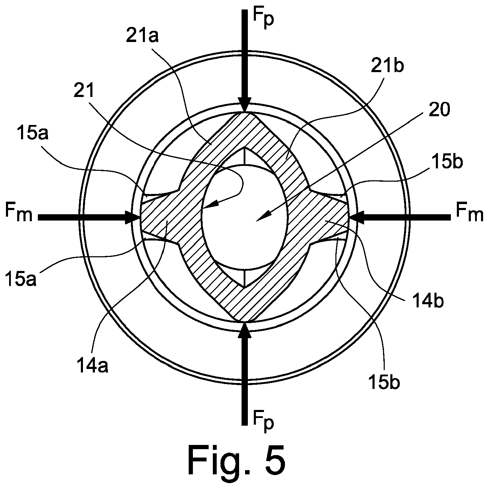

One or more ribs **14** are provided to connect the cylindrical areas **10a, 10b** of said main body **10** upstream and downstream of said narrowing area **13.** Such ribs **14** are arranged along the longitudinal direction and, as can be seen in particular in figures 4 and 5, have a tapered cross section towards the centre of the main body **10,** at said narrowing area **13,** with joining areas **15a, 15b.**

With particular reference to the section of figure 5, defined by a transverse plane perpendicular to the longitudinal axis and passing through the central narrowing area **13,** said main body **10** internally comprises a longitudinal axial opening **20** having a substantially elliptical inner transversal profile **21** defined by the union of two opposite arcs of circumference **21a, 21b,** the central segment of each of said arcs of circumference **21a, 21b** being directly joined to said ribs **14,** in particular indicated in figure 5 with **14a, 14b** respectively, which therefore extend radially from said arcs of circumference **21a, 21b.**

The ribs **14** allow an optimal distribution of the pressure or mechanical forces necessary to close the valve, and at the same time optimise the elastic return during opening.

In the same way, the particular conical geometry of the tapered areas **13a, 13b** optimises the opening and closing strokes of the valve itself, thereby resulting in greater reactivity of the valve.

Again with reference to figure 5, it can be seen how in the preferred embodiment of the pinch valve according to the present invention, shown as an example and not for limiting purposes, on a transversal section plane said arcs of circumference **21a, 21b** have the respective ends extending until they touch the inner surface **10a** of said main body **10.**

Thanks to this particular configuration of the inner rib portions **22a, 22b** that connect the arcs of circumference **21a, 21b** that form the profile **21** of said longitudinal axial opening **20** to the inner surface **10a** of said main body **10,** the mechanical behaviour of the pinch valve according to the present invention is optimized.

In the case of use of pneumatic management, the closing pressure force **Fₚ** that acts on the outer surface of the main body **10** acts according to the direction of the arrow **Fₚ** indicated in figure 5, and is equally divided by the symmetrical geometry of the profile **21.**

On the other hand, in the case of use with a mechanical device, the direction of the force **Fₘ** will be perpendicular to the ribs **14,** for reference again see figure 5, where the forces **Fₚ and Fₘ** are shown at the same time only as an example.

The particular elliptical geometry of the transversal profile **21,** made by the union of two arcs of circumference **21a, 21b** makes it possible, whilst keeping the passage flow rate unchanged, to reduce the closing stroke of the pinch, allowing a greater activation speed and, thanks to the smaller stroke, less deformations of the material, consequently extending the lifetime of the membrane itself.

The design of the pinch valve **1** according to the present invention is not therefore symmetrical on the transverse plane, and it is therefore important that the sleeve is correctly positioned in its seat.

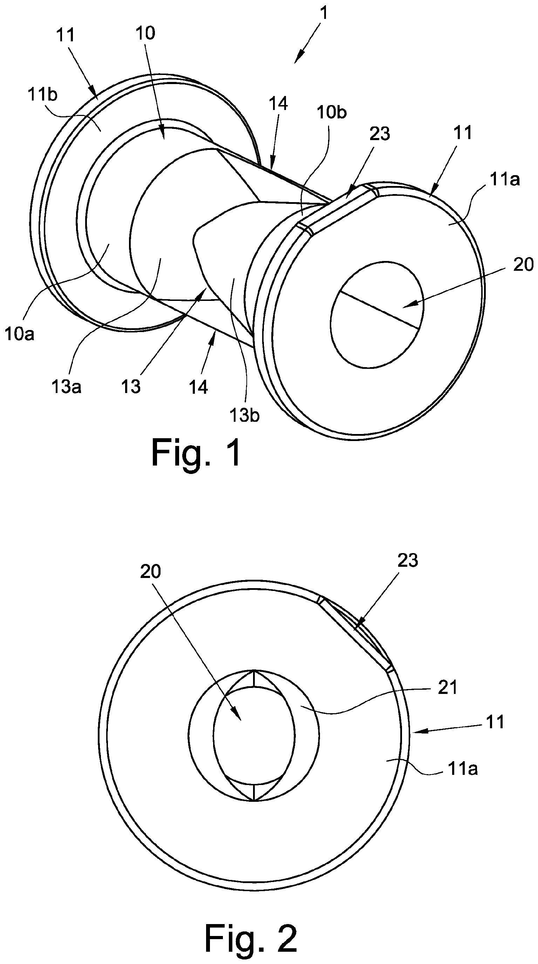

In order to ensure that the valve **1** is correctly positioned in its seat, on at least one of said end areas **11** an abutment plane **23** is advantageously provided, for example defined by a bevel according to what is visible in figure 1, which will have a corresponding abutment element in said seat.

The pinch valve **1** thus conceived, preferably made with elastomeric materials or other suitable materials according to what is known to those skilled in the art, can undergo numerous modifications and variants, all of which are covered by the scope of protection of the invention as defined by its claims.

Moreover, all of the details can be replaced by technically equivalent elements. In practice, the materials used, as well as the sizes, can be whatever according to the technical requirements.

## Claims

1. Pinch valve (1), for insertion in pneumatically or mechanically-actuated devices, comprising a hollow substantially cylindrical main body (10) extending longitudinally, comprising end areas (11) defining abutment surfaces (11a, 11b) that extend on a plane substantially perpendicular to the longitudinal axis of said cylindrical main body (10) and also comprising a longitudinal axial opening (20), wherein said axial opening, on a transverse plane, has a substantially elliptical inner profile (21) defined by the union of two arcs of circumference (21a, 21b), wherein on said main body (10) it comprises at least one narrowing area (13) defined by the joining of two conical tapered segments (13a, 13b), said main body (10) comprises, at each end area (11), a first cylindrical segment (10a, 10b), each of said first cylindrical segments (10a, 10b) having a corresponding one of said conical tapered segments (13a, 13b) joined to it, **characterised in that** radial ribs (14a, 14b) extend radially from the two arcs of circumference (21a, 21b), said radial ribs (14a, 14b) being arranged longitudinally with tapered profile, having greater width at the narrowing area (13) of said main body (10) and said radial ribs (14a, 14b) having a tapered cross section towards the centre of the main body (10), at said narrowing area (13), with joining areas (15a, 15b).

2. Pinch valve (1) according to claim 1, **characterised in that** said narrowing area (13) is arranged in a substantially central position with respect to the longitudinal extension of said main body (10).

3. Pinch valve (1) according to one or more of the previous claims, **characterised in that** said outer ribs (14) connect together the areas upstream and downstream of said narrowing area (13) being arranged along the longitudinal direction.

4. Pinch valve (1) according to one or more of the previous claims, **characterised in that** said elliptical profile (21) is symmetrical with respect to the axis of axial symmetry of said main body (10).

5. Pinch valve (1) according to one or more of the previous claims, **characterised in that** on at least one of said end areas (11) an abutment plane (23) is advantageously provided.

6. Pneumatically or mechanically-actuated device comprising a pinch valve (1) according to one or more of the previous claims.

## Patentansprüche

1. Quetschventil (1), zum Einbau in pneumatisch oder mechanisch betätigte Vorrichtungen, mit einem hohlen, im wesentlichen zylindrischen Hauptkörper (10), der sich in Längsrichtung erstreckt, mit Endbereichen (11), die Anschlagflächen (11a, 11b) definieren, die sich in einer Ebene im wesentlichen senkrecht zur Längsachse des zylindrischen Hauptkörpers (10) erstreckt, und mit einer axialen Längsöffnung (20), wobei die axiale Öffnung in einer Querebene ein im Wesentlichen elliptisches Innenprofil (21) aufweist, das durch die Vereinigung zweier Umfangsbögen (21a, 21b) definiert ist, wobei sie an dem Hauptkörper (10) mindestens einen sich verengenden Bereich (13) umfasst, der durch die Verbindung zweier konisch zulaufender Segmente (13a, 13b) definiert ist, wobei der Hauptkörper (10) an jedem Endbereich (11) ein erstes zylindrisches Segment (10a, 10b) aufweist, wobei jedes der ersten zylindrischen Segmente (10a, 10b) ein jeweils entsprechendes der konisch verjüngten Segmente (13a, 13b) aufweist, das mit ihm verbunden ist, **dadurch gekennzeichnet, dass** sich radiale Rippen (14a, 14b) radial von den beiden Umfangsbögen (21a, 21b) erstrecken, wobei die radialen Rippen (14a, 14b) in Längsrichtung mit verjüngtem Profil angeordnet sind und eine größere Breite am Verengungsbereich (13) des Hauptkörpers (10) aufweisen und die radialen Rippen (14a, 14b) einen verjüngten Querschnitt zur Mitte des Hauptkörpers (10) hin am Verengungsbereich (13) aufweisen, mit Verbindungsbereichen (15a, 15b).

2. Quetschventil (1) nach Anspruch 1, **dadurch gekennzeichnet, dass** der Verengungsbereich (13) in einer im Wesentlichen zentralen Position in Bezug auf die Längserstreckung des Hauptkörpers (10) angeordnet ist.

3. Quetschventil (1) nach einem oder mehreren der vorhergehenden Ansprüche, **dadurch gekennzeichnet, dass** die äußeren Rippen (14) die Bereiche des Verengungsbereichs (13), die entlang der Längsrichtung angeordnet sind, stromaufwärts und stromabwärts miteinander verbinden.

4. Quetschventil (1) nach einem oder mehreren der vorhergehenden Ansprüche, **dadurch gekennzeichnet, dass** das elliptische Profil (21) symmetrisch in Bezug auf die Achse der axialen Symmetrie des Hauptkörpers (10) ist.

5. Quetschventil (1) nach einem oder mehreren der vorhergehenden Ansprüche, **dadurch gekennzeichnet, dass** an mindestens einem der Endbereiche (11) vorteilhaft eine Anschlagebene (23) vorgesehen ist.

6. Pneumatisch oder mechanisch betätigte Vorrichtung mit einem Quetschventil (1) nach einem oder mehreren der vorhergehenden Ansprüche.

## Revendications

1. Vanne à pincement (1), pour l'insertion dans des dispositifs actionnés pneumatiquement ou mécaniquement, comprenant un corps principal cylindrique considérablement creux (10) s'étendant longitudinalement, comprenant des zones d'extrémité (11) définissant des surfaces d'appui (11a, 11b) qui s'étendent sur un plan considérablement perpendiculaire à l'axe longitudinal dudit corps principal cylindrique (10) et comprenant également une ouverture axiale longitudinale (20), où ladite ouverture axiale, sur un plan transversal, a un profil intérieur considérablement elliptique (21) défini par l'union de deux arcs de circonférence (21a, 21b), où sur ledit corps principal (10) il comprend au moins une zone de rétrécissement (13) définie par l'assemblage de deux segments coniques (13a, 13b), ledit corps principal (10) comprend, au niveau de chacune zone d'extrémité (11), un premier segment cylindrique (10a, 10b), chacun desdits premiers segments cylindriques (10a, 10b) ayant un segment correspondant desdits segments coniques (13a, 13b) assemblé à celui-ci, **caractérisée en ce que** des nervures radiales (14a, 14b) s'étendent radialement à partir de deux arcs de circonférence (21a, 21b), lesdites nervures radiales (14a, 14b) étant disposées longitudinalement avec un profil conique, ayant une largeur supérieure au niveau de la zone de rétrécissement (13) dudit corps principal (10) et lesdites nervures radiales (14a, 14b) ayant une section transversale conique vers le centre du corps principal (10), au niveau de ladite zone de rétrécissement (13), avec des zones d'assemblage (15a, 15b).

2. Vanne à pincement (1) selon la revendication 1, **caractérisée en ce que** ladite zone de rétrécissement (13) est disposée dans une position considérablement centrale par rapport à l'extension longitudinale dudit corps principal (10) .

3. Vanne à pincement (1) selon l'une ou plusieurs des revendications précédentes, **caractérisée en ce que** lesdites nervures extérieures (14) relient les zones en amont et en aval desdites zones de rétrécissement (13) étant disposées le long de la direction longitudinale.

4. Vanne à pincement (1) selon l'une ou plusieurs des revendications précédentes, **caractérisée en ce que** ledit profil elliptique (21) est symétrique par rapport à l'axe de symétrie axiale dudit corps principal (10).

5. Vanne à pincement (1) selon l'une ou plusieurs des revendications précédentes, **caractérisée en ce que** sur au moins une desdites zones d'extrémité (11) un plan d'appui (23) est avantageusement prévu.

6. Dispositif actionné pneumatiquement ou mécaniquement comprenant une vanne à pincement (1) selon l'une ou plusieurs des revendications précédentes.
